# EUROPEAN PATENT SPECIFICATION

(11) **EP 0 590 111 B1**
(45) Date of publication and mention of the grant of the patent: **16.04.1997**
(21) Application number: 93906287.3
(22) Date of filing: 19.02.1993
(51) Int. Cl.: B60R 1/04

(54) **BREAKAWAY REARVIEW MIRROR MOUNTING BRACKET**
HALTERUNG FÜR EINKLAPPBAREN RÜCKSPIEGEL
SUPPORT AMOVIBLE POUR RETROVISEUR

(30) Priority: 25.02.1992 US 840870
(43) Date of publication of application: 06.04.1994
(73) Proprietor: GENTEX CORPORATION, Zeeland, Michigan 49464 (US)
(72) Inventor: SUMAN, Danny, L., West Olive, MI 49460 (US); RUMSEY, Wayne, J., Holland, MI 49424 (US); DE KLEINE, Paul, C., Holland, MI 49424 (US)
(74) Representative: Liebau, Gerhard, Dipl.-Ing.
(86) International application number: US9301889
(87) International publication number: WO9316900

(56) References cited:
- GB-A- 2 046 687
- US-A- 3 131 251
- US-A- 3 367 616
- US-A- 4 254 931
- US-A- 4 632 348
- US-A- 4 936 533
- US-A- 4 948 085
- US-A- 5 058 851
- US-A- 5 151 828

## Description

### BACKGROUND OF THE INVENTION

### FIELD OF THE INVENTION

This invention relates to interior rearview mirror assemblies mounted to a button on the interior of a vehicle windshield.

### SCOPE OF THE PRIOR ART

Interior windshield-mounted rearview mirrors are commonly used in nearly all vehicles manufactured and sold throughout the world. Different mounts have been designed for different vehicles and are subjected to varying regulations of the different countries in which automobiles and similar vehicles are manufactured.

In the United States and Canada, for example, supports for conventional windshield-mounted rearview mirrors typically include a base member, known commonly as a "button", adhered to the inside of the windshield surface. The button has vertically disposed edges forming rails. The rails may be formed by a bevel on each edge. A support member, known in the industry as a "channel mount" is slidably fitted over the button whereby sides of the channel mount engage the rails of the button. The channel mount usually includes a mounting means such as an arm, ball joint, or other structure for suspending a rearview mirror in the vehicle compartment for use by the driver of the vehicle. A typical mounting assembly in U.S. vehicles includes a linkage with a double ball joint for adjusting the mirror relative to the windshield in a variety of positions.

Typically, the channel mount is retained on the button by the use of a set screw. However, the use of such a set screw has created numerous manufacturing and maintenance problems in the vehicle assembly. For example, set screws are typically purchased as low-priced commodity items with low tolerances in the screw threads. The inconsistency in such threads can result in cross threading of the screw in its aperture. Sometimes, automatic screwdrivers stop prematurely at a preset stall torque even through the support is not firmly tightened against the button. Sometimes the screws fit so sloppily that there is no torque. Also, the set screw is often stripped out by over tightening because of the improper sizing of the socket to the set screw or a weakness in the threads of the screw itself.

Attempts have been made in the past to design interior mirror mounts without the use of a set screw. An example may be found in U.S. Patent No. 4 936 533 issued to Adams et al. on June 26, 1990. This patent discloses a vehicle accessory mounting assembly comprising a spring retainer on the channel mount which is adapted to engage and grip an opposing, raised rib on the surface of the button. The Adams et al. design, however, presents some problems in that it requires a specially designed button and it is virtually impossible to disassemble without utilizing a special tool.

Various governmental agencies have imposed certain standards, test procedures, test conditions, records and recording formats on the manufacture of internal rearview mirror assemblies. The current federal safety standard in the United States is applicable to passenger cars, multipurpose passenger vehicles, trucks, and buses. The stated purpose of the standard is to reduce the number of deaths and injuries that occur when the driver of a motor vehicle does not have a clear and reasonably unobstructed view to the rear. It requires that each passenger car have an inside rearview mirror of unit magnification and that the mirror provide a specified view. The mirror mounting is required to provide a stable support for the mirror. Mirror adjustment by tilting in both horizontal and vertical directions must be provided. Further, if the mirror assembly is located in the head impact area, the mounting is required to deflect, collapse, or break away without leaving sharp edges when the reflective surface of the mirror is subjected to a force of 90 pounds in any forward direction which is not more than 45° from the forward longitudinal direction of the vehicle.

The breakaway feature becomes particularly important when one considers the increasing use of passenger-side air bags. When a passenger-side air bag is inflated, it may impact the windshield-mounted rearview mirror, and can cause the mirror to deflect with a force sufficient enough to break the mirror mount or crack the windshield. In either case, sharp edges resulting from the fractures may be sufficient to prematurely deflate the air bag, thus rendering it ineffective. Proposed future standards may require a windshield-mounted mirror to break away from the mounting without leaving sharp edges at a force substantially less than 90 pounds.

The U.S. Patent to Aikens et al., 4 254 931, (issued March 10, 1981) discloses an interior rearview mirror mount wherein a spring clip on a mounting member slides over a button on a windshield to provide a breakaway mount. The button has a plurality of serrations in an inner face thereof. The spring clip has a lock spring which engages the serrations to prevent easy sliding of the mounting member from the button. The Aikens et al. mount requires a special button which differs from buttons now in use. Further, the plurality of serrations may give a false impression as to whether the mount is fully seated on the button.

The European Economic Community (EEC) currently has motor vehicle regulations which require that a rearview mirror assembly be able to withstand a predetermined static load including the support of a weight without breaking or, if the assembly does break, without glass fragments being released. Consequently, breakaway mirror mounts have been used in Europe for a long time. Most European mirror mounts include a single ball-joint connection with the rearview mirror. An example of such a rearview mirror mount is manufactured by Hohe KG and comprises a specially designed button which is adapted to receive a complementary-shaped channel mount with a spring retainer. Rather than being slidably mounted on the button, however, the channel mount is positioned over the button and then rotated anywhere from 60° to 90° to lock the mount to the windshield button. The button has a detent which is adapted to receive a tab on the channel mount when the channel mount is rotated to the locked position. It has been found that this awkward movement increases the time for installation during assembly of the vehicle.

One of the difficulties encountered with various breakaway designs for interior rearview mirror mounts is in minimizing vibration of the mirror during vehicle travel. Unless the mirror mount is tightly held to the button on the windshield, the mirror will be subjected to vibration which blurs images in the mirror. Thus, mirror mounts must be sufficiently rigid to withstand normal loads imposed during use. In addition, mounts must maintain proper operating characteristics throughout the full range of temperatures which might be experienced.

A need exists for an interior rearview mirror mount which is capable of retaining a mirror element in a stable position, is configured to be usable in the majority of vehicles which have varying windshield areas, angles of inclination, and radii of curvature, which will readily break away from the button when subjected to an impact of predetermined magnitude, which is nevertheless readily removable for replacement, and which is aesthetically pleasing and capable of high-volume production at reduced manufacturing cost from that heretofore experienced.

### BRIEF DESCRIPTION OF THE DRAWINGS

The invention will now be described with reference to the following drawings, in which:
FIG. 1 is a side elevation partially broken away of a rearview mirror assembly as mounted to a windshield utilizing the bracket of the present invention;
FIG. 2 is an exploded isometric view illustrating a mounting bracket and the spring clip embodying the invention;
FIG. 3 is an isometric view of an assembled mounting bracket and spring clip illustrated in FIG. 2;
FIG. 4 is a sectional view taken along the line 4-4 of FIG. 3;
FIG. 5A is a sectional view in the same plane as FIG. 5B, but showing the mounting bracket in a position relative to the button substantially spaced from the fully seated position of FIG. 5B;
FIG. 5B is a sectional view taken along the line 5-5 of FIG. 4;
FIG. 6 is a sectional view similar to FIG. 5B, but with the mounting bracket slid partially off from the button;
FIG. 7 is an assembled isometric view of a modified form of the spring clip and the mounting bracket; and
FIG. 8 is a sectional view similar to FIG. 5B, but through the embodiment illustrated in FIG. 7.

### DESCRIPTION OF THE PREFERRED EMBODIMENTS

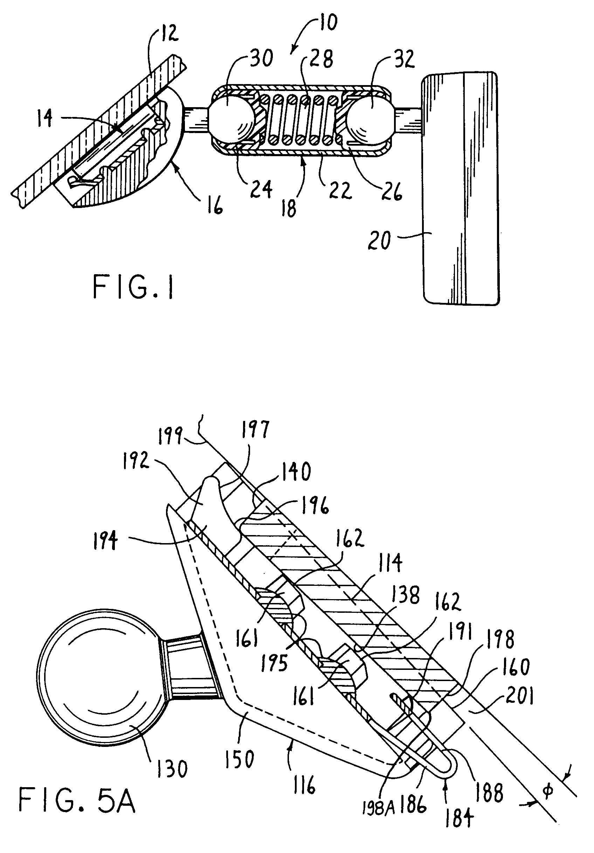

Referring now to the drawings in greater detail, FIG. 1 illustrates a rearview mirror assembly 10 as mounted to the inside surface of a conventional automotive windshield 12. The windshield 12 is shown at a conventional slant to the horizontal, and it will be understood that the mirror assembly 10 is generally mounted on the inner surface thereof usually in about the transverse center of the windshield and forwardly of the occupants of the front seat. A base member 14, commonly known in the industry as a "button", is permanently adhered to the inner surface of the windshield 12 by means of a conventionally-known metal-to-glass adhesive such as polyvinyl butyral, also known as PVB. A bracket 16, sometimes also known as a "channel mount" is slidably received over the button 14 and adjustably supports a rearview mirror mounting arm 18 and a rearview mirror 20 in cantilevered fashion such that they project into the vehicle passenger compartment for use by the vehicle driver. Although not forming any part of the present invention, a typical mounting arm 18 includes a swaged, one-piece tubular casing 22 enclosing a pair of plastic ball cups 24, 26 at each end thereof. The ball cups 24, 26 are forced outwardly by a compression spring 28 against the ends of the casing 22. A ball member 30 projects from the bracket 16 and is received in the ball cup 24. Similarly, a ball member 32 projects from the rearview mirror 20 and is received in the ball cup 26. It can be seen that the double ball joints of this structure provide a universal connection between the mirror 20 and the windshield 12 so that the driver may adjust it for his best rearview vision. It will further be understood that numerous variations for mounting the rearview mirror 20 to the bracket 16 are in common usage throughout the world, any one of which is easily adaptable for use with the bracket 16. For example, as is common in Europe, a single arm may project from the bracket 16 with a ball-and-socket connection on the end thereof directly with the rearview mirror 20.

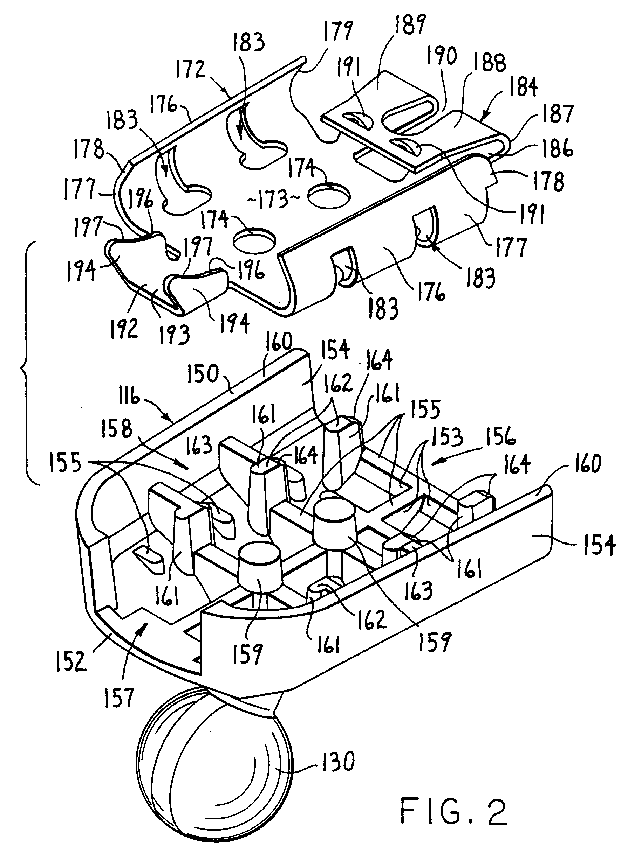

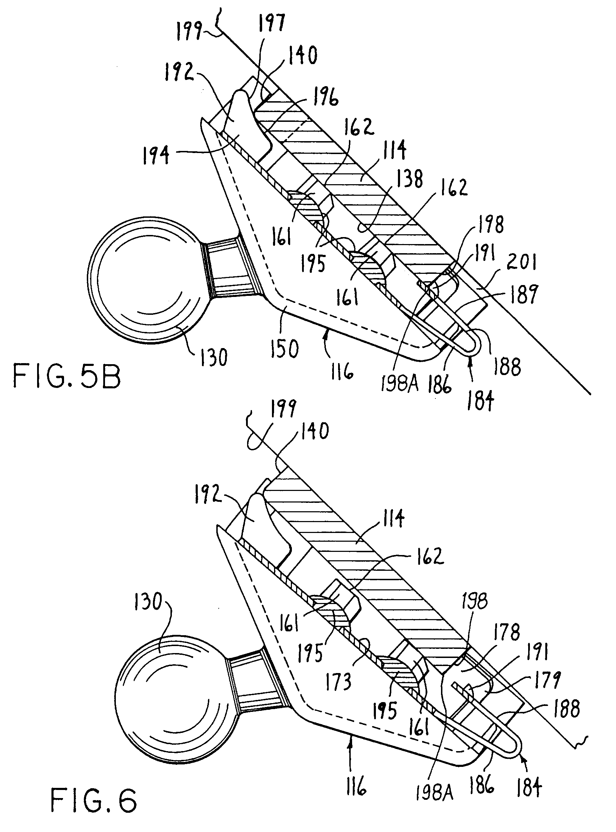

FIGS. 2-8 illustrate a mounting bracket 116 and a spring clip 172. The mounting bracket 116 comprises a one-piece body 150 from which a ball member 130 projects outwardly. The body 150 has a top end 152 which may be curved to roughly conform to the top surface 140 (FIGS. 5A, 5B and 6) of the button 114. The mounting bracket 116 includes an interior recess 158 bounded by sidewalls 154 which terminate at opposite ends in open ends 156 and 157 and a windshield facing edges 160. The interior recess 158 includes a plurality of ribbing 153 defining a mounting surface 155 for the spring clip 172. A pair of upstanding mounting posts 159 extend upwardly from the mounting surface 155 in the longitudinally central region of the body 150. All upwardly facing surfaces 155 of the ribbing 153 are generally coplanar.

A plurality of upstanding button support members 161 project upwardly from the mounting surfaces 155 and terminate at the upper ends in a flat surface 162, each of which is generally coplanar with the other and generally parallel to the mounting surface 155. Some of the upstanding button support members 161 are connected to the sidewalls 154 through web members 163. An edge of the flat surfaces 162 facing the open end 156 are bevelled as at 164 downwardly toward the mounting surfaces 155 to define bottom facing surfaces thereat.

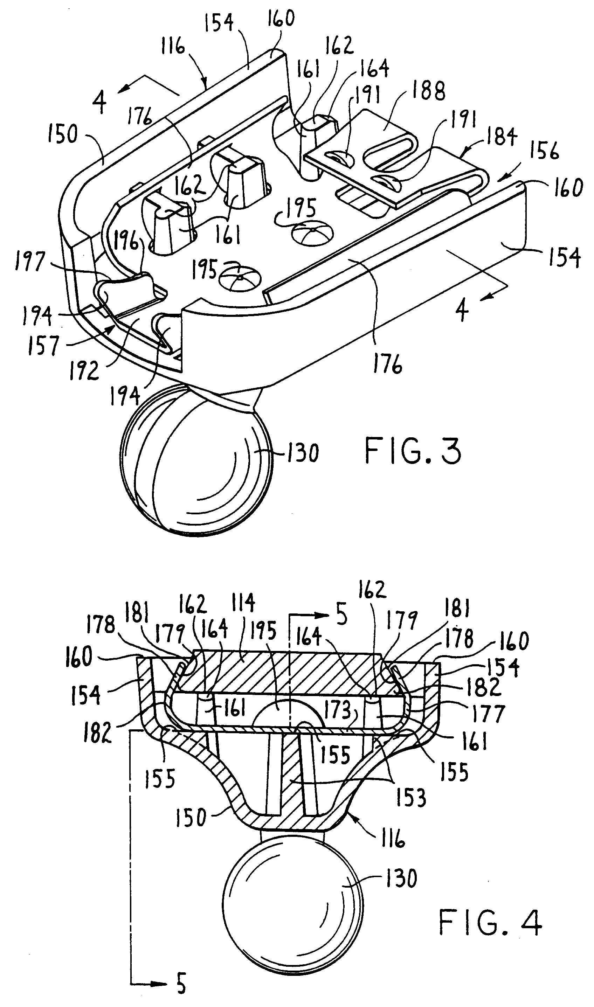

The spring clip 172 is constructed of the same material as has been described above. The spring clip includes a generally flat base portion 173 having a pair of openings 174 therein and which are adapted to receive the mounting posts 159 therein as shown in FIGS. 3, 5B and 6. A pair of elastically yieldable sidewalls 176 extend upwardly from the lateral edges of the base portion 173. In this particular embodiment, each sidewall has an upstanding portion 177 oriented generally perpendicularly to the plane of the base portion 173 as shown in FIG. 4. The upper edge of the sidewall portion 177 terminates in an inwardly angled segment 178, the inwardly facing surface 179 of which is adapted to engage the bevelled, outwardly facing, surface 181 of the button 114. In other words, each of the sidewalls 176 define a groove adapted to receive a side edge portion 182 of the button 114 as shown in FIG. 4. Further, each sidewall 176 has a plurality of openings 183 therein, the number of which corresponds to the number of upstanding button support members 161 on the body 150. Each of the openings is generally T-shaped as best illustrated in FIG. 2. The stem of the T is adapted to receive the web 163 whereas the cross portion of the T is adapted to receive the upstanding button support member 161 as shown in FIG. 3.

The spring clip 172 includes a resilient locking flange 184 extending longitudinally from one end of the base portion 173. More specifically, the locking flange 184 includes a first segment 186 contiguous with the base portion 173 and extends longitudinally from the aforesaid one end of the base portion and at an angle thereto that is in the range of 10° to 20° to the plane of the base portion 173. The distal end of the first segment 186 terminates in an upwardly projecting portion 187 that is, and in this particular embodiment, radiused. A second segment 188 of the locking flange 184 is contiguous with the upper end of the upwardly projecting portion 187 and extends from the upwardly projecting portion in an overlapped relation with the first segment 186 to a location intermediate the sidewalls 176 of the spring clip 172. The upper surface 189 of the second segment 188 has a pair of upstanding tabs 191 thereon, which tabs 191 are formed from the material of the second segment 188 of the locking flange 184. In the assembled state of the spring clip to the body 150 as illustrated in FIG. 3 as well as in FIG. 5B, the upper surface of the second segment 188 is initially oriented in a plane that is slightly inclined with respect to the base portion 173 so that the second segment 188 diverges away from the plane of the base portion 173. The purpose of this orientation will become apparent below.

If desired, the locking flange 184 can be provided with a central cutout portion 190 to render the locking flange 184 more easily yieldable to forces applied thereto.

A button rest construction 192 is provided at the opposite end of the spring clip 172 and includes a base part 193 contiguous with the base portion 173 and is generally coplanar therewith. The base part 193 has a pair of upstanding sidewall portions 194 contiguous therewith at the lateral side edges thereof. The upper edges of the sidewalls 194 terminate in first and second edge surface portions 196 and 197 extending generally inclined relative to the surfaces 162 on the upper end of each of the button support members 161 when the spring clip is in the assembled condition as illustrated in FIGS. 3 and 5B. The first edge surface 196 also extends in a generally upwardly inclined relation to the plane of the base portion 173 at an angle generally in the range of 10° to 30°. A second edge surface 197 extends inclined further upwardly from the surface 196 and at an angle that is generally approximately in the range of 140° to 160° to the surface 196.

As the spring clip is lowered into the interior recess 158 of the body 150, the openings 174 in the spring clip 172 receive the upstanding posts 159 as stated above. The button rest 192 is received in the open end 157 and the locking flange 184 projects outwardly from the open end 156. The upstanding posts 159 will project through the openings 174 in the spring clip 172 so that they can be press fit or spun over to provide a rivet-like connection 195.

During assembly, as shown in FIGS. 5A and 5B, the body 150 of the mounting bracket 116 is first oriented adjacent the top end 140 of the button 114 and the sidewalls 176 of the spring clip 172 straddling the outwardly facing sides 181 of the button 114 and caused to be slid in a direction generally parallel to the windshield surface 197 to the position of FIG. 5A. In this position, the mounting bracket 116 is not yet seated on the button. Further, the sidewalls 176 of the spring clip 172 have not yet fully gripped the outwardly facing sides 181 of the button 114. As a result, the spring force of the locking flange 184 is strong enough to prevent a relative flexing movement between the second segment 188 and the first segment 186. This will cause the mounting bracket 116 particularly the plane containing the edges 160 (see FIG. 2) of the sidewalls 154 to become angularly related at an angle φ of 3° to 5° to a plane of the inside facing surface 199 of the windshield as shown in FIG. 5A. During the initial stages of this movement, the upstanding tabs 191 on the second segment 188 are sliding along the rear surface 138 of the button 114. During this movement, the surfaces 162 on the button support members 161 are spaced from the rear surface 138 of the button 114. The surfaces 164 assure the smooth transition of the body 150 onto the button 114. Continued movement of the mounting bracket 116 downwardly and to the right in FIG. 5A in a direction parallel to the windshield glass 199 will eventually bring the mounting bracket 116 to the position illustrated in FIG. 5A. In the position of FIG. 5A, it will be noted that the edges 160 of the sidewalls 154 of the mounting bracket 116 are still angularly related to the windshield surface 199. However, and since the sidewalls 176 of the spring clip 172 are now more fully engaged with the outwardly facing sides 181 of the button 114, a greater force attempting to urge the edges 160 into a parallel relation with the windshield surface 199 is applied by the sidewalls 176 of the spring clip 172. Yet, the second segment 188 of the locking flange 184 is flexed toward the first segment 186 a little but sufficient spring force remains in the locking flange to prevent a complete parallel relationship from being achieved between the edges 160 and the windshield surface until the moment that the mounting bracket moves to the position of FIG. 5B. In the position of FIG. 5B, it will be noted that the tabs 191 on the surface 189 of the second segment 188 of the locking flange 184 will spring away from the first segment 186 of the locking flange 184 to snap over the locking flange edge 198A and to become abutted on the bottom surface 198 of the button 114. When the second segment 188 of the locking flange 184 makes this final movement, there will be generated a single audible click indicating that the mounting bracket is fully seated and securely retained on the button under ordinary conditions. The top end 140 of the button 114 will engage generally the juncture between the surfaces 196 and the surfaces 197 on the sidewalls of the button rest 192. Further, and because of the corresponding convergent taper of the outwardly facing side surfaces 181 of the button 114 and the inwardly inclined relation of the segments 178 of the sidewalls 176 of the spring clip 172, the button 114 is virtually wedged into the spring clip 172. At the very moment that the single audible click occurs, the edges 160 move suddenly into a parallel relationship with the windshield surface 199. This sudden movement of the body 150 of the mounting bracket will be felt by the installer as a sudden pulse to the fingers which will manually signal the installer that a full seat of the mounting bracket 116 on the button 114 has occurred even if noise from adjacent assembly operations prevented the single audible signal from being heard by the installer. The interconnection is sufficiently firm so that during normal use, the rearview mirror can be freely adjusted by the driver via the mounting arm to any desired position, and vibration of the mirror during travel is minimized. Further, the resilient interconnection is such that if a predetermined force is directed against the mounting bracket 116 in any direction, it would be snapped off the button 114 and dropped from its mounting as described above. When such force is applied to the mounting bracket 116, the mounting bracket 116 will be urged further downwardly and rightwardly of the button 114 as illustrated in FIG. 6. The top end 140 of the button 114 will slide onto the surfaces 197 of the button rest 192 to effect a virtual prying of the sidewalls 176 from their respective engagement with the outwardly facing sides 181 of the button 114.

When the mounting bracket 116 is forcibly impacted and removed from the button 114, the exposed edges of the button are all rounded as shown in FIGS. 4-6. The rounded edges on the button will prevent occupants of the vehicle from coming into contact with any sharp corners or sharp edges on the button.

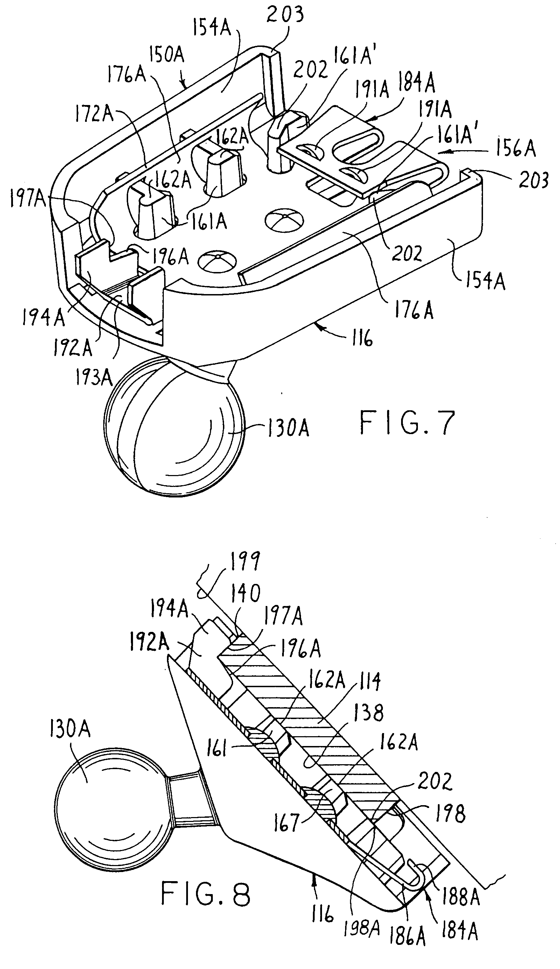

In situations where it is not desired for the mirror to be forcibly removed from the button 114 upon head impact (EEC Test), the spring clip 172A illustrated in FIG. 7 can be utilized. The construction of the spring clip 172A is virtually identical to the spring clip 172 and, therefore, the same reference numerals will be used in describing structure that is identical to the structure shown in FIGS. 2-6 but with the suffix "A" added to each reference numeral. It is believed unnecessary to describe the structure in FIGS. 7-8 that is identical to the structure in FIGS. 2-6 because such is presented above.

Turning now to the important differences that exist between the embodiment of FIGS. 7-8 and the embodiment of FIGS. 2-6, the button rest 192A includes a pair of upstanding sidewalls 194A projecting upwardly from a base part 193A. In this particular embodiment, a pair of surfaces 196A and 197A are provided, tee surface 196A being generally inclined relative to the surfaces 162A on the upper end of the button support members 161, just as is the surface 196 described above. The surface 197A is generally oriented through a sharp corner at an angle in the range of 100°-120° to the surface 196A and is adapted to flushly engage the top end 140 of the button 114 as illustrated in FIG. 8.

In the embodiment of FIGS. 2-6, when the mounting bracket 116 has been assembled to the position illustrated in FIG. 5B, it will be noted that the bottom end of the mounting bracket, here the right end, is spaced from the windshield glass 199 by a gap 201. The spring force generated by the material of the locking flange 184 is not strong enough to prevent the mounting bracket 116 from rocking slightly in a counter-clockwise direction relative to the button 114 so as to reduce the size of the gap 201. In some instances, vibration of the mounting bracket 116 may possibly occur as the vehicle is driven. In order to cure this possibility, upstanding button support members 161A' which straddle the locking flange 184A are provided and include a surface component 202 which is oriented in the region between the tabs 191A and the button rest 192A so that the bottom portion of the button 114 adjacent the locking flange edge 198 is positively supported by the surface component 202 as shown in FIG. 8. The gripping action of the sidewalls 176A of the spring clip 172A will be sufficient to hold the surfaces 162A and 202 into tight engagement with the rear surface 138 of the button 114 to thereby prevent relative movement of the mounting bracket 116 relative to the button 114.

In addition, the sidewalls 154A (FIG. 7) at their ends adjacent the open end 156A are turned inwardly as at 203 to make the mounting bracket 116 less dangerous due to rounded corners being provided in the event that the mounting bracket 116 does indeed become removed from the button 114. This would be particularly true if the body 150A were employed in the embodiment of FIGS. 2-6.

The invention is applicable to various different shapes of channel-mount types of buttons in addition to the two buttons shown in the drawings. The invention, for example, is applicable to the button disclosed in the U.S. Patent 4,936,533, issued June 26, 1990.

It will be apparent that the present invention provides an interior rearview mirror mount which will maintain the mirror element in a stable position with a minimum of vibration during normal use, which is adapted for use with standard, preexisting, low-cost buttons, and which will readily break away from the button when subjected to an impact of predetermined magnitude.

## Claims

1. A breakaway bracket (16, 116) adapted for mounting a rearview mirror to a button (14, 114) having a rear surface secured to an inner surface of a motor vehicle windshield, said button having opposed side surfaces (181) forming rails at an outer surface, a top surface, a bottom surface, a front or rear facing surface (138) extending between the top and bottom surfaces and facing away from said inner surface of said windshield, said front surface being generally parallel to said inner surface of the windshield, and a sharp locking flange edge (198A) at a juncture of the front and bottom surfaces, said bracket comprising:
a body (150) having a mounting surface;
a spring clip (172) securely mounted to the mounting surface, said spring clip being made of elastically yieldable spring material and having a base portion (173), longitudinally extending, opposed, resilient side flanges projecting upwardly from the base portion, each of the side flanges defining a groove adapted to slidably receive a corresponding one of the button side surface rails in tongue-and-groove fashion, characterized in that the spring clip (172) is of a unitary construction and further includes a resilient locking flange (184) projecting upwardly from the base portion, which resilent locking flange includes a first segment (186) extending longitudinally from one end of the base portion, an upwardly projecting portion (187) oriented at a distal end of the first segment and including a second segment contiguous with the upwardly projecting portion (187) and extending in an overlapping relation with the first segment but spaced from the first segment, the second segment, as the side flanges become fully engaged with the side surface rails, being elastically yieldably movable toward the plane of the base portion (173) and the first segment (186) about an axis defined generally by the upwardly projecting portion (187) and against a spring force generated by the elastically yielding spring material as the side flanges become fully engaged with the button side surface rails and, without any audible clicking sounds caused by a sliding movement of the locking flange over the front surface, snaps over the locking flange edge (198A) of the button to firmly engage the bottom surface and simultaneously generate a clearly perceived indication that the bracket is fully seated on the button whereby the bracket will be securely retained on the button under ordinary conditions when the button is fully received in the spring clip but is adapted to be snapped off the button in a direction away from the windshield when a force of predetermined magnitude is applied thereto.

2. The breakaway bracket according to Claim 1, wherein the clearly perceived indication is a single audible click.

3. The breakaway bracket according to Claim 1, wherein the front surface (138) is entirely flat.

4. The breakaway bracket according to Claim 1, wherein the portion of the resilent locking flange adapted to firmly engage the bottom surface (198) of the button includes at least one upwardly projecting tab (191) on said second segment (188) on a side thereof remote from the first segment (186), a surface on the tab firmly engaging the bottom surface (198) of the button when the bracket is fully seated on the button (114).

5. The breakaway bracket according to Claim 1, wherein the resilient locking flange (184) extends longitudinally from a first end of the base portion (173), wherein means defining a button rest (192) is provided and which extends longitudinally from a second end of the base portion (173) opposite the first end, the button rest (192) including means defining an upstanding surface oriented in a plane that is generally perpendicular to the longitudinal direction of the side flanges and against which an edge of the button is adapted to fixedly rest.

6. The breakaway bracket according to Claim 1, wherein the resilient locking flange (184) extends longitudinally from a first end of the base portion (173), wherein means defining a button rest (192) is provided and which extends longitudinally from a second end of the base portion opposite the first end, the button rest including means defining a first surface (196) extending generally inclined to a plane containing the base portion, and a second, upwardly inclined, surface (197) oriented in a plane generally defining an obtuse angle with said first surface, the button being adapted to rest normally on at least one of the first and second surfaces, but slidingly engaging the second surface when the body is impacted by an external force.

7. The breakaway bracket according to Claim 6, wherein the first segment (186) is generally inclined with respect to the base portion (173).

8. The breakaway bracket according to Claim 7, wherein the body (150) includes at least one upstanding button support member (161, 161A, 162, 162A) along each of the lateral sides of the body and extending upwardly beyond the mounting surface, and wherein the side flanges each include means defining an opening (183) for receiving the respective button support member therein, and wherein an upper end of the button support member terminates in a button support surface (162, 162A) generally parallel to the base portion.

9. The breakaway bracket according to Claim 8, wherein an edge of the button support surface (162, 162A) facing the resilent locking flange (184A) is bevelled toward the mounting surface.

10. The breakaway bracket according to Claim 8, wherein a plurality of upstanding button support members (161, 161A, 162, 162A) are provided along each lateral side of the body, at least a pair of the button support members (161A') straddling the resilent locking flange (184).

11. The breakaway bracket according to Claim 10, wherein the pair of button support members (161A') straddling the locking flange each include a surface segment that extends into a region between the button rest (192) and the portion of the resilent locking flange (184) adapted to firmly engage the bottom surface of the button.

12. The breakaway bracket according to Claim 1, wherein said portion of said resilent locking flange (184), as the side flanges of said spring clip (172) become fully engaged with the button side surface rails (181), causes said body (150) to adopt a first angular position to the windshield, a movement of the resilent locking flange (184) to a position firmly engaging the bottom surface (198) of the button simultaneously causing said body to suddenly move to a second and final angular, fully seated, position on said button thereby constituting said clearly perceived indication.

13. The breakaway bracket according to Claim 1, wherein said resilent locking flange (184) includes first means defining a tab (191) having a surface firmly engaging the bottom surface (198) of the button when the bracket is satisfactorily mounted on the button and second means (189) which strikes the front surface (138) of the button to emit a single and pronounced audible click in response to said tab (191) snapping over the locking flange edge (198A), said audible click being said clearly perceived indication that said bracket is fully seated on the button.

14. The breakaway bracket according to Claim 13, wherein said second means (189) is a flat surface that becomes oriented generally parallel to and engages the front surface (138) of the button when said bracket is fully seated on said button.

## Patentansprüche

1. Abreißbare Halterung (16, 116) für die Anbringung eines Rückspiegels an einen Knopf (14, 114), dessen Rückseite an der inneren Oberfläche einer Kraftfahrzeug-Windschutzscheibe befestigt ist, wobei dieser Knopf gegenüberliegende Seitenflächen (181), die an einer äußeren Oberfläche Schienen bilden, eine Topfläche, eine Bodenfläche, eine Stirnfläche oder rückwärts gerichtete Fläche (138), die sich zwischen der Topfläche und der Bodenfläche erstreckt, die von der inneren Oberfläche der Windschutzscheibe weg gerichtet ist und die im wesentlichen parallel zu der inneren Oberfläche der Windschutzscheibe ist, und eine scharfe Verriegelungsflanschkante (198A) an der Verbindungsstelle der Stirnfläche und der Bodenfläche aufweist, wobei die Halterung umfaßt:
einen Körper (150), der eine Montagefläche hat;
eine Federklemme (172), die fest mit der Montagefläche verbunden ist, wobei die Federklemme aus elastisch nachgebendem Federmaterial besteht und einen Basisabschnitt (173) und sich längserstreckende, gegenüberliegende, federnde Seitenflansche, die sich vom Basisabschnitt aufwärts erstrecken, aufweist, wobei jeder der Seitenflansche eine Nut bildet, die dazu bestimmt ist eine entsprechende der Seitenflächenschienen des Knopfes in einer Nut- und Federart aufzunehmen, **dadurch gekennzeichnet**, daß die Federklemme von einstückiger Konstruktion ist und ferner einen federnden, von dem Basisabschnitt aufwärts vorstehenden Verriegelungsflansch (184) umfaßt, welcher ein erstes Segment (186), das sich längs von einem Ende des Basisabschnitts erstreckt, einen aufwärts vorspringenden Abschnitt (187), der am äußeren Ende des ersten Segments angeordnet ist, und ein zweites, an den aufwärts vorspringenden Abschnitt (187) angrenzendes und sich in überlappender Beziehung gegenüber dem ersten Segment erstreckendes jedoch von diesem beabstandetes Segment umfaßt, wobei das zweite Segment, wenn die Seitenflansche voll in Eingriff mit den Seitenflächenschienen kommen zur Ebene des Basisabschnittes (173) und zum ersten Segment (186) um eine Achse , die im wesentlichen durch den aufwärts vorspringenden Abschnitt (187) definiert ist und entgegen einer Federkraft, die durch das elastisch nachgiebige Federmaterial erzeugt wird, elastisch nachgiebig beweglich ist, wenn die Seitenflansche voll in Eingriff mit den Seitenflächenschienen des Knopfes kommen und ohne hörbare Klickgeräusche, die durch eine Gleitbewegung des Verriegelungsflansches über die Stirnfläche erzeugt werden, über die Verriegelungsflanschkante (198A) des Knopfes einschnappt, um fest an der Bodenfläche anzuliegen und gleichzeitig eine klar wahrnehmbare Anzeige zu erzeugen, daß die Halterung am Knopf voll eingerastet ist, wodurch die Halterung unter Normalbedingungen sicher am Knopf gehalten wird, wenn der Knopf voll in der Federklemme aufgenommen ist, jedoch in einer Richtung von der Windschutzscheibe weg vom Knopf ausrasten kann, wenn eine Kraft von vorbestimmter Größe auf sie einwirkt.

2. Abreißbare Halterung nach Anspruch 1 bei der die klar wahrnehmbare Anzeige ein einziges hörbares Klicken ist.

3. Abreißbare Halterung nach Anspruch 1 bei der die Stirnfläche (138) (des Knopfes) vollkommen flach ist.

4. Abreißbare Halterung nach Anspruch 1 bei der der Abschnitt des elastischen Verriegelungsflansches, der dazu bestimmt ist fest an der Bodenfläche (198) des Knopfes anzuliegen, wenigstens einen an der vom ersten Segment (186) abgewandten Seite des zweiten Segmentes (188) aufwärts vorstehenden Lappen (191) umfaßt, von dem eine Fläche fest an der Bodenfläche (198) des Knopfes anliegt, wenn die Halterung am Knopf (114) voll eingerastet ist.

5. Abreißbare Halterung nach Anspruch 1 bei dem der elastische Verriegelungsflansch (184) sich von einem ersten Ende des Basisabschnittes (173) aus längs erstreckt, bei dem ein Mittel, welches eine Knopfabstützung (192) bildet, vorgesehen ist und welches sich von dem zweiten Ende des Basisabschnittes (173) gegenüberliegend zum ersten Ende längs erstreckt, wobei die Knopfabstützung (192) Mittel aufweist, die eine aufrecht orientierte Fläche in einer Ebene definieren, die im wesentlichen senkrecht zur Längsrichtung der Seitenflansche ist, und an denen eine Kante des Knopfes fest anliegen kann.

6. Abreißbare Halterung nach Anspruch 1 bei dem der elastische Verriegelungsflansch (184) sich von einem ersten Ende des Basisabschnittes (173) aus längs erstreckt, bei dem ein Mittel, welches eine Knopfabstützung (192) bildet, vorgesehen ist und welches sich von dem zweiten Ende des Basisabschnittes gegenüberliegend zum ersten Ende längs erstreckt, wobei die Knopfabstützung Mittel aufweist, die eine erste Fläche (196) welche sich im wesentlichen geneigt zu einer Ebene erstreckt, die den Basisabschnitt enthält, und eine zweite aufwärts geneigte Fläche (197), die in einer Ebene orientiert ist, welche einen stumpfen Winkel mit der ersten Fläche bildet, definieren, wobei der Knopf sich normalerweise an mindestens einer dieser beiden Flächen abstützen kann, jedoch verschiebbar an der zweiten Fläche anliegt, wenn auf den Körper eine äußere Kraft einwirkt.

7. Abreißbare Halterung nach Anspruch 6 bei dem das erste Segment (186) im wesentlichen gegenüber dem Basisabschnitt (173) geneigt ist.

8. Abreißbare Halterung nach Anspruch 7 bei dem der Körper (150) wenigstens ein aufrechtes Knopfabstützglied entlang jeder seitlichen Seite des Körpers aufweist, welches sich aufwärts über die Montagefläche erstreckt, und bei dem die Seitenflansche jeder Mittel umfaßt, die eine Öffnung (183) zur Aufnahme des jeweiligen Knopfabstützgliedes bilden, und bei dem ein oberes Ende des Knopfabstützgliedes in einer Knopfabstützfläche (162, 162A) endet, die im wesentlichen parallel zum Basisabschnitt ist.

9. Abreißbare Halterung nach Anspruch 8, bei dem eine Kante der Knopfabstützfläche (162, 162A), die dem elastischen Verriegelungsflansch (184A) zugekehrt ist, zur Montagefläche hin abgeschrägt ist.

10. Abreißbare Halterung nach An spruch 8, bei der eine Mehrzahl von aufrechten Knopfabstützgliedern (161, 161A, 162, 162A)entlang den seitlichen Seiten des Körpers vorgesehen sind, wobei mindestens ein Paar von Knopfabstützfliedern (161A') beidseitig des elastischen Verriegelungsflansches (184) angeordnet ist.

11. Abreißbare Halterung nach Anspruch 10, bei der von dem Paar von Knopfabstützgliedern (161A'), welches beidseitig des Verriegelungsflansches angeordnet ist, jedes einen Flächenabschnitt aufweist, der sich in einen Bereich zwischen der Knopfabstützung (192) und dem Abschnitt des elastischen Verriegelungsflansches (184) erstreckt, der dazu bestimmt ist, fest an der Bodenfläche des Knopfes anzuliegen.

12. Abreißbare Halterung nach Anspruch 1 bei der der genannte Abschnitt des elastischen Verriegelungsflansches (184), wenn die Seitenflansche der Federklemme (172) mit den Seitenflächenschienen (181) des Knopfes voll in Eingriff kommen, den Körper (150) veranlaßt eine erste, schräge Stellung zu der Windschutzscheibe einzunehmen, und eine Bewegung des elastischen Verriegelungsflansches (184) in eine Stellung bei der er fest an der Bodenfläche (198) des Knopfes anliegt gleichzeitig den Körper veranlaßt sich plötzlich in eine zweite und endgültige, schräge, voll eingerastete Stellung auf dem Knopf zu bewegen, wodurch die klar wahrnehmbare Anzeige gebildet wird.

13. Abreißbare Halterung nach Anspruch 1 bei der der elastische Verriegelungsflansch (184) erste Mittel aufweist, die einen Lappen (191) definieren, der eine Fläche aufweist, die fest an der Bodenfläche (198) des Knopfes anliegt, wenn die Halterung zufriedenstellend an dem Knopf montiert ist, und ein zweites Mittel,welches auf die Stirnfläche (138) des Knopfes schlägt, um einen einzigen deutlich ausgeprägten Klick, als Folge des Einrastens des Lappens (191) über die Verriegelungsflanschkante (198A), auszulösen, wobei dieser hörbare Klick die klar wahrnehmbare Anzeige ist, daß die Halterung voll am Knopf eingerastet ist.

14. Abreißbare Halterung nach Anspruch 13 bei dem das zweite Mittel (189) eine flache Fläche ist, im wesentlichen parallel zu der Stirnfläche (138) des Knopfes ausgerichtet wird und an dieser anliegt, wenn die Halterung voll eingerastet ist.

## Revendications

1. Support (16, 116) détachable ou amovible destiné au montage d'un rétroviseur sur un bouton (14, 114), présentant une surface arrière fixée à une surface interne d'un pare-brise d'un véhicule à moteur, ledit bouton présentant des surfaces latérales (181) opposées formant des rails sur une surface externe, une surface supérieure, une surface inférieure une surface faisant face à l'avant ou à l'arrière (138) s'étendant entre les surfaces supérieure et inférieure et opposées à ladite surface interne dudit pare-brise, ladite surface avant étant généralement parallèle à ladite surface interne du pure-brise, et une arête (198A) pointue de bride de verrouillage en une jointure des surfaces avant et inférieure, ledit support comprenant :
- un corps (150) présentant une surface de montage ;
- une pince à ressort (172) montée de manière fixe sur la surface de montage, ladite pince à ressort étant fabriquée dans une matière de ressort élastiquement pliable et présentant une portion de base (173), des brides latérales résilientes opposées s'étendant longitudinalement vers le haut depuis la portion de base, chacune des brides latérales définissant une rainure destinée à recevoir de manière coulissante l'un des rails de surface latéraux correspondant du bouton en assemblage à languette / rainure ; caractérisé en ce que la pince à ressort (172) est de construction unitaire et inclut également une bride de verrouillage (184) résiliente faisant saillie vers le haut depuis la portion de base, ladite bride de verrouillage résiliente inclut un premier segment (186) s'étendant longitudinalement depuis une extrémité de la portion de base, une portion faisant saillie vers le haut (187) orientée en une extrémité distale du premier segment et incluant un second segment contigu avec la portion faisant saillie vers le haut et s'étendant en relation de chevauchement avec le premier segment mais espacée du premier segment, le second segment, lorsque les brides latérales sont entièrement engagées avec les rails de surface latéraux, pouvant être déplacé élastiquement de manière pliable vers le plan de la portion de base (173) et du premier segment (186) autour d'un axe défini généralement par la portion faisant saillie vers le haut (187) et contre une force de ressort générée par la matière de ressort élastiquement pliable lorsque les brides latérales s'engagent entièrement avec les rails de surface latéraux du bouton et, sans bruit d'encliquetage audible causé par un mouvement coulissant de la bride de verrouillage par-dessus la surface avant, s'encliquette par-dessus l'arête (198A) de la bride de verrouillage du bouton pour engager fermement la surface inférieure et générer simultanément une indication clairement perçue que le support est entièrement assis sur le bouton, le support étant de ce fait fermement maintenu sur le bouton dans des conditions ordinaires lorsque le bouton est reçu entièrement dans la pince à ressort, mais est destiné à se détacher du bouton dans une direction éloignée du pare-brise lorsqu'une force de magnitude prédéterminée est appliquée à celui-ci.

2. Support détachable selon la revendication 1, dans lequel l'indication clairement perçue est un seul clic audible.

3. Support détachable selon la revendication 1, dans lequel la surface avant (138) est entièrement plate.

4. Support détachable selon la revendication 1, dans lequel la portion de la bride de verrouillage résiliente destinée à engager fermement la surface inférieure (198) du bouton inclut au moins une patte (191) faisant saillie vers le haut sur ledit second segment (188) sur un côté de celui-ci éloigné du premier segment (186), une surface sur la patte engageant fermement la surface inférieure (198) du bouton lorsque le support est entièrement assis sur le bouton (114).

5. Support détachable selon la revendication 1, dans lequel la bride de verrouillage résiliente (184) s'étend longitudinalement depuis une première extrémité de la portion de base (173), dans lequel des moyens définissant un support (192) de bouton sont fournis qui s'étendent longitudinalement depuis une seconde extremité de la portion de base (173) opposée à la première extrémité, le support de bouton (1792) incluant des moyens définissant une surface verticale orientée dans un plan qui est généralement perpendiculaire à la direction longitudinale des brides latérales et contre laquelle une arête du bouton est destinée à reposer fermement.

6. Support détachable selon la revendication 1, dans lequel la bride de verrouillage résiliente (184) s'étend longitudinalement depuis une première extrémité de la portion de base (173), dans lequel des moyens définissant un support (192) de bouton sont fournis qui s'étendent longitudinalement depuis une seconde extrémité de la portion de base opposée à la première extrémité, le support de bouton incluant des moyens définissant une première surface (196) s'étendant généralement de manière inclinée vers un plan contenant la portion de base, et une seconde surface (197) inclinée vers le haut orientée dans un plan définissant généralement un angle obtus avec ladite première surface, le bouton étant destiné à reposer normalement sur au moins l'une desdites première et seconde surfaces, mais engageant de manière coulissante la seconde surface lorsque le corps subi un impact exercé par une force externe.

7. Support détachable selon la revendication 6, dans lequel le premier segment (186) est généralement incliné par rapport à la portion de base (173).

8. Support détachable selon la revendication 7, dans lequel le corps (150) inclut au moins un élément de support vertical (161, 161A, 162, 162A) du bouton le long de chacun des côtés latéraux du corps et s'étendant vers le haut au-delà de la surface de montage, et dans lequel les brides latérales incluent chacune des moyens définissant une ouverture (183) destinée à recevoir l'élément de support du bouton respectif, et dans lequel une extrémité supérieure de l'élément de support du bouton se termine en une surface de support (162, 162A) du bouton généralement parallèle à la portion de base.

9. Support détachable selon la revendication 8, dans lequel une arête de la surface de support (162, 162A) du bouton faisant face à la bride de verrouillage résiliente (184A) est biseautée vers la surface de montage.

10. Support détachable selon la revendication 8, dans lequel plusieurs éléments de support verticaux (161, 161A, 162, 162A) du bouton sont fournis le long de chaque côte latéral du corps, au moins une paire des éléments de support (161A') du bouton enjambant la bride de verrouillage résiliente (184).

11. Support détachable selon la revendication 10, dans lequel la paire d'éléments de support (161A') du bouton enjambant la bride de verrouillage inclut un segment de surface qui s'étend dans une zone entre le support (192) de bouton et la portion de la bride de verrouillage résiliente (184) destinée à engager fermement la surface inférieure du bouton.

12. Support détachable selon la revendication 1, dans lequel ladite portion de ladite bride de verrouillage résiliente (184), lorsque les brides latérales de ladite pince à ressort (172) s'engagent entièrement avec les rails (181) de la surface latérale du bouton, oblige ledit corps (150) à adopter une première position angulaire par rapport au pare-brise, un mouvement de la bride de verrouillage résiliente (184) vers une position engageant fermement la surface inférieure (198) du bouton obligeant simultanément ledit corps à se déplacer soudainement vers une seconde position angulaire finale entièrement assise sur ledit bouton, constituant de ce fait ladite indication clairement perçue.

13. Support détachable selon la revendication 1, dans lequel ladite bride de verrouillage résiliente (184) inclut des premiers moyens définissant une patte (191) ayant une surface fermement engagée avec la surface inférieure (198) du bouton lorsque le support est montée de manière satisfaisante sur le bouton et des seconds moyens (189) qui heurtent la surface avant (138) du bouton pour émettre un seul clic audible et prononcé en réponse à l'encliquetage de ladite patte (191) par-dessus l'arête (198A) de la bride de verrouillage, ledit clic audible étant ladite indication clairement perçue que ledit support est entièrement assis sur le bouton.

14. Support détachable selon la revendication 13, dans lequel lesdits seconds moyens (189) sont une surface plate qui est généralement orientée de manière parallèle par rapport à la surface avant (138) du bouton et engage celle-ci lorsque ledit support est entièrement assis sur ledit bouton.
